# EUROPEAN PATENT APPLICATION

(11) **EP 2 088 353 A1**
(43) Date of publication of application: **12.08.2009**
(21) Application number: 08021890.2
(22) Date of filing: 17.12.2008
(51) Int. Cl.: F16J 15/32

(54) **Oil seal**

(30) Priority: 08.02.2008 JP 2008028620
(71) Applicant: Carl Freudenberg KG, 69469 Weinheim (DE)
(72) Inventor: Furuyama, Hideyuki, Fukushima, 960-1193 (JP)

(57) **Abstract**

In a seal lip of an oil seal, a torque is reduced by thickening an oil film formed in a sliding portion thereof. An oil seal (1) has a seal lip (2) which slidably comes into close contact with a circumferential surface of a mating member such as a shaft or the like, and the seal lip (2) has a seal-fluid side inclined surface (4) and an anti-seal-fluid side inclined surface (3) and further has a sliding line (5) between both the inclined surfaces (3, 4). The anti-seal-fluid side inclined surface (3) is provided with a normal threaded portion (7) performing an operation pushing back the seal-fluid by a pumping action during rotation, and the seal-fluid side inclined surface (4) is provided with a reverse threaded portion (8) performing an operation sucking the seal-fluid by the pumping action during rotation. The seal-fluid comes into concentration at the sliding line (5) due to the pumping action of both the threaded portions (7, 8).

## Description

### BACKGROUND OF THE INVENTION

### Field of the Invention

The present invention relates to an oil seal as a kind of a sealing device. The oil seal according to the invention is used in, for example, a field involved with a vehicle, a general machine, or the like.

### Description of the Related Art

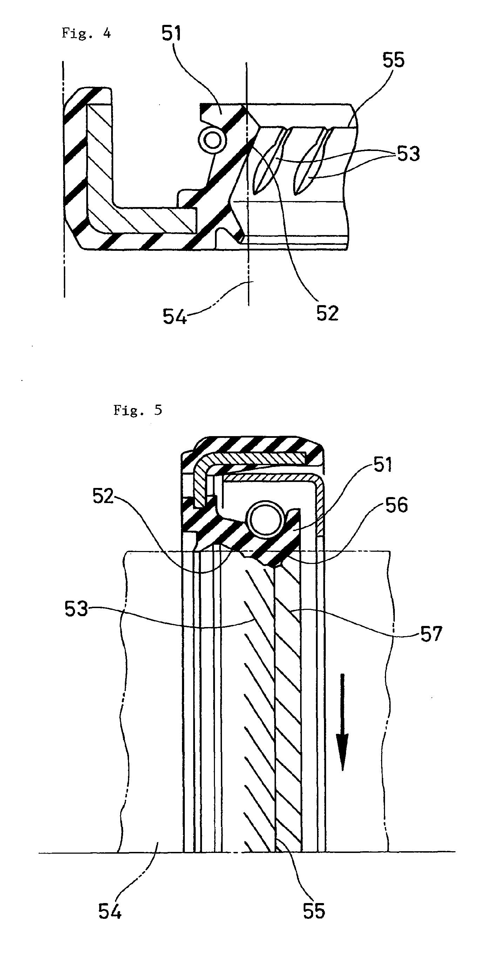

The oil seal which has been proposed by the present inventors is shown in Fig. 4. An anti-seal-fluid side inclined surface 52 of a seal lip 51 is provided with a threaded portion 53 performing an operation pushing back a seal-fluid by a pumping action during rotation (see Japanese Patent Publication No. 3278349). Accordingly, when a shaft 54 is rotated, the threaded portion 53 exhibits the pumping action, thereby ensuring a sufficient sealing property for sealing the seal-fluid.

However, according to this related art, since the threaded portion 53 is provided in only the anti-seal-fluid side inclined surface 52 of the seal lip 51, an oil film formed in a sliding portion 55 may be thinned. In this case, a sliding torque may increase.

Additionally, as shown in Fig. 5, there is disclosed an oil seal in which a threaded portion 57 is provided in a seal-fluid side inclined surface 56 as well as an anti-seal-fluid side inclined surface 52 of a seal lip 51 (see Japanese Utility Model Application Laid-Open No. H03-29768).

However, according to this related art, since the threaded portion 57 provided in the seal-fluid side inclined surface 56 exhibits the pumping action in the same direction as the threaded portion 53 provided in the anti-seal-fluid side inclined surface 52, the oil film formed in the sliding portion 55 is further thinned, thereby causing a problem in that a torque further increases.

### SUMMARY OF THE INVENTION

The present invention is contrived in consideration of the above-described problems, and an object of the invention is to reduce a torque by thickening an oil film formed in a sliding portion in a seal lip of an oil seal.

In order to achieve the above-described object, according to an aspect of the invention, there is disclosed an oil seal having a seal lip which slidably comes into close contact with a circumferential surface of a mating member such as a shaft or the like, the seal lip including a seal-fluid side inclined surface and an anti-seal-fluid side inclined surface and further including a sliding line between both the inclined surfaces, wherein the anti-seal-fluid side inclined surface is provided with a normal threaded portion performing an operation pushing back the seal-fluid by a pumping action during rotation, and the seal-fluid side inclined surface is provided with a reverse threaded portion performing an operation sucking the seal-fluid by the pumping action during rotation, so that the seal-fluid comes into concentration at the sliding line due to the pumping action of both the threaded portions.

In the oil seal with the above-described configuration according to the invention, the anti-seal-fluid side inclined surface of the seal lip is provided with the normal threaded portion performing the operation pushing back the seal-fluid by the pumping action during rotation, and the seal-fluid side inclined surface is provided with the reverse threaded portion performing the operation sucking the seal-fluid by the pumping action during rotation. Then, a thick oil film is formed in the sliding line so that the seal-fluid comes into concentration at the sliding line due to the pumping action of both the threaded portions.

The present invention exhibits the following advantages.

That is, in the oil seal according to the invention, in order that the seal-fluid is pushed back by the pumping action of the normal threaded portion provided in the anti-seal-fluid side inclined surface and the seal-fluid is sucked by the pumping action of the reverse threaded portion provided in the seal-fluid side inclined surface, the seal-fluid comes into concentration at the sliding line between both the inclined surfaces, and the thick oil film is formed in the sliding line. Accordingly, as the desired object of the invention, it is possible to reduce a torque by thickening the oil film formed in the sliding line and thus to reduce a sliding heat amount and a sliding abrasion amount generated in the seal lip. All the normal threaded portion and the reverse threaded portion are configured as a threaded-portion-shaped protrusion or groove integrally formed with the seal lip, the protrusion and the groove are easily formed upon or after forming the seal lip. Accordingly, as described above, it is possible to easily manufacture and use the oil seal exhibiting the excellent advantage in the torque reduction. Since the normal threaded portion is disposed on the anti-seal-fluid side, the oil film coming into concentration at the sliding line does not leak to the anti-seal-fluid side by the pumping action. Additionally, for this reason, it is desirable that a pumping power of the normal threaded portion is set to be equal or slightly larger than that of the reverse threaded portion.

### BRIEF DESCRIPTION OF THE DRAWINGS

Fig. 1 is a cross sectional view showing a main part of an oil seal according to an embodiment of the invention.
Fig. 2 is a cross sectional view showing a main part of the oil seal according to another embodiment of the invention.
Figs. 3A to 3D are perspective views showing exemplary shapes of threaded portions.
Fig. 4 is a cross sectional view showing a main part of the oil seal according to a related art.
Fig. 5 is a cross sectional view showing a main part of the oil seal according to another related art.

### DESCRIPTION OF THE PREFERRD EMBODIMENT

The present invention includes the following embodiments.
(1) An object of the invention is to reduce a torque by thickening an oil film formed in a sliding portion.
(2) In order to achieve the above-described object, a normal threaded portion is provided on an atmosphere side surface (anti-seal-fluid side inclined surface) and a reverse threaded portion is provided on an oil side surface (seal-fluid side inclined surface). The threaded portions are provided up to a sliding surface (sliding line).
(3) The oil comes into concentration at the sliding line by the actions of the atmosphere-side normal threaded portion and the oil-side reverse threaded portion, and the oil film formed in the sliding portion is thickened, thereby obtaining a low torque. A sealing property is maintained by a pumping action of the atmosphere-side normal threaded portion to thereby obtain both the sealing property and the low torque.
(4) In the first embodiment, the normal threaded portion is provided on the atmosphere side and the reverse threaded portion is provided on the oil side. As a type of the threaded portion, there are a parallel threaded portion, a bilge-shaped threaded portion, a taper threaded portion, and the like, and those threaded portions may be used. The threaded portions are disposed in a circumferential direction so as to deviate from each other. The sliding of the lip occurs in a line between the atmosphere side surface provided with the normal threaded portion and the oil side surface provided with the reverse threaded portion. The oil comes into concentration at the sliding line by the actions of the atmosphere-side normal threaded portion and the oil-side reverse threaded portion, and the oil film formed in the sliding portion is thickened, thereby obtaining a low torque. A sealing property is maintained by a pumping action of the atmosphere-side normal threaded portion to thereby obtain both the sealing property and the low torque. Additionally, since the torque is low, a sliding heat is small. Since the oil film is thick, an abrasion is small and durability is long.
(5) In the second embodiment, unlike the above (4), the atmosphere-side normal threaded portion and the oil-side reverse threaded portion are disposed at the same position in a circumferential direction. The other configurations, effects, and advantages are the same as those of the first embodiment.

### [Embodiment]

Next, the embodiment of the invention will be described with reference to the accompanying drawings.

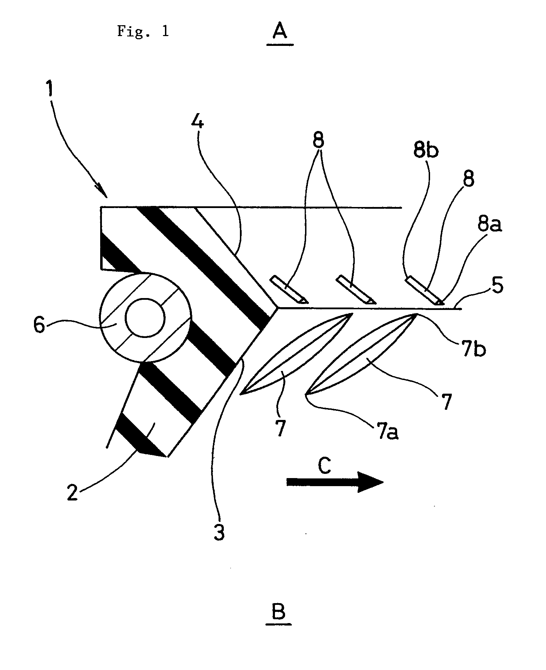

Fig. 1 is a cross sectional view showing a main part of an oil seal 1 according to the embodiment of the invention. The oil seal 1 according to the embodiment of the invention has the following configuration.

That is, the oil seal 1 includes a seal lip 2 formed as a predetermined rubber elastic member such as elastically deformable rubber or resin. A peripheral surface in the front end portion of the seal lip 2 is provided with an inclined surface (seal-fluid side inclined surface) 4 of a seal-fluid side surface A and an inclined surface (anti-seal-fluid side inclined surface) 3 of an anti-seal-fluid side (atmosphere side) B. An annular sliding line (sliding portion) 5 is provided between both the inclined surfaces 3 and 4 so as to come into slidable contact with the peripheral surface of the shaft. The sliding line 5 is formed as a tip having a triangular shape in a sectional view. Additionally, the outer peripheral portion of the seal lip 2 is fitted to a garter spring 6 for adjusting a fastening allowance.

The anti-seal-fluid side inclined surface 3 of the seal lip 2 is provided with a normal threaded portion (oil discharging threaded portion) 7 performing an operation pushing back the seal-fluid by a pumping action during rotation. The normal threaded portion 7 is formed as a plurality of protrusion groups provided in a circumferential direction, and in the drawing, the shape is depicted as a bilge shape.

Additionally, the seal-fluid side inclined surface 4 of the seal lip 2 is provided with a reverse threaded portion (oil sucking threaded portion) 8 performing an operation sucking the seal-fluid by the pumping action during rotation. The reverse threaded portion 8 is formed as a plurality of protrusion groups provided in a circumferential direction, and in the drawing, the shape is depicted as a parallel threaded portion shape.

Regarding a spiral direction of the threaded portions 7 and 8, the spiral direction of the normal threaded portion 7 is set to a direction inclined forward in a shaft rotary direction (depicted by the arrow C) from an anti-seal-fluid side end portion 7a to a seal-fluid side end portion 7b. On the contrary, the spiral direction of the reverse threaded portion 8 is set to a direction inclined backward in a shaft rotary direction (depicted by the arrow C) from an anti-seal-fluid side end portion 8a to a seal-fluid side end portion 8b.

Additionally, regarding a pumping power (pumping flow rate) of both the threaded portions 7 and 8, the pumping power of the normal threaded portion 7 is set to be larger than that of the reverse threaded portion 8.

The oil seal 1 having the above-described configuration is mounted to the inner periphery of a shaft hole of a housing (not shown) in various rotary machines so as to come into slidable contact with the peripheral surface of the shaft, thereby sealing the seal-fluid (oil). With the above-described configuration, the following effects and advantages are obtained.

That is, in the oil seal 1 having the above-described configuration, since the anti-seal-fluid side inclined surface 3 of the seal lip 2 is provided with the normal threaded portion 7 for performing an operation pushing back the seal-fluid by the pumping action during rotation, and the seal-fluid side inclined surface 4 is provided with the reverse threaded portion 8 for performing an operation sucking the seal-fluid by the pumping action during rotation, the seal-fluid is pushed back by the pumping action of the normal threaded portion 7 provided in the anti-seal-fluid side inclined surface 3, and the seal-fluid is sucked by the pumping action of the reverse threaded portion 8 provided in the seal-fluid side inclined surface 4. Accordingly, as a result of the actions of both the threaded portions 7 and 8, the seal-fluid comes into concentration at the sliding line 5 between the anti-seal-fluid side inclined surface 3 and the seal-fluid side inclined surface 4, and a thick oil film is formed in the sliding portion. Accordingly, it is possible to reduce a sliding torque by thickening the oil film formed in the sliding line 5, and thus to reduce a sliding heat amount and a sliding abrasion amount.

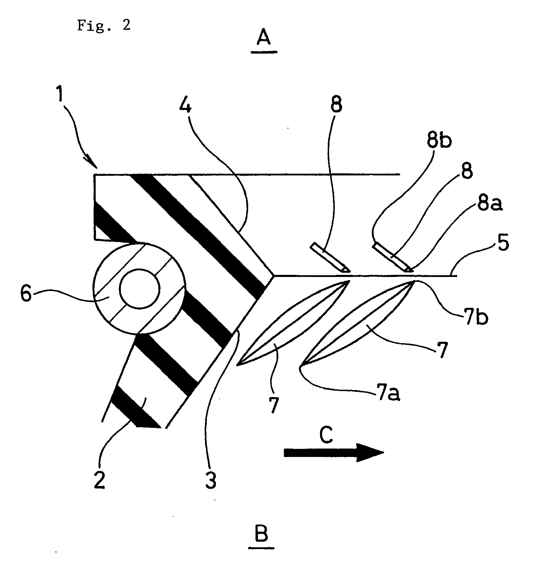

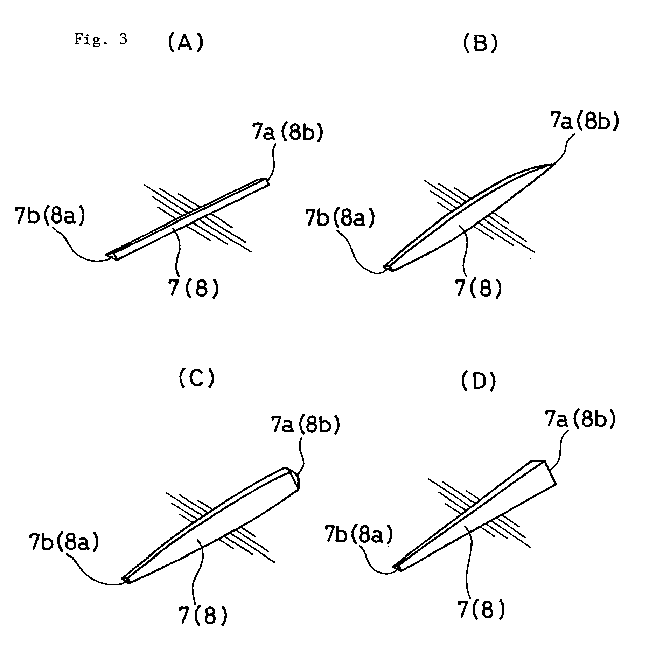

Additionally, the threaded portions 7 and 8 may have the following configuration.
(1) In the above-described embodiment, the normal threaded portion 7 and the reverse threaded portion 8 are disposed in a circumferential direction so as to deviate from each other. On the contrary, as shown in Fig. 2, the normal threaded portion 7 and the reverse threaded portion 8 may be disposed at the same position in a circumferential direction. Here, to dispose the threaded portions at the same position in the circumferential direction indicates that the seal-fluid side end portion 7b of the normal threaded portion 7 and the anti-seal-fluid side end portion 8a of the reverse threaded portion 8 are disposed at the same position in a circumferential direction.
(2) In the above-described embodiment, the seal-fluid side end portion 7b of the normal threaded portion 7 is disposed so as not extend to the sliding line 5, and a gap (axial gap) is set between the end portion 7b and the line 5. On the contrary, the seal-fluid side end portion 7b of the normal threaded portion 7 may be disposed so as to extend to the sliding line 5.
(3) In the above-described embodiment, the anti-seal-fluid side end portion 8a of the reverse threaded portion 8 is disposed so as not to extend to the sliding line 5, and a gap (axial gap) is set between the end portion 8a and the line 5.
   On the contrary, the anti-seal-fluid side end portion 8a of the reverse threaded portion 8 may be disposed so as to extend to the sliding line 5.
(4) The shape of the threaded portions 7 and 8 is not particularly limited, but may be, for example, a parallel threaded portion shown in Fig. 3A, a bilge-shaped threaded portion shown in Figs. 3B and 3C, or a taper threaded portion shown in Fig. 3D. Additionally, the threaded portions 7 and 8 may have a groove shape or a step shape.

## Claims

1. An oil seal (1) having a seal lip (2) which slidably comes into close contact with a circumferential surface of a mating member such as a shaft or the like, the seal lip (2) including a seal-fluid side inclined surface (4) and an anti-seal-fluid side inclined surface (3) and further including a sliding line (5) between both the inclined surfaces (3, 4), wherein the anti-seal-fluid side inclined surface (3) is provided with a normal threaded portion (7) performing an operation pushing back the seal-fluid by a pumping action during rotation, and the seal-fluid side inclined surface (4) is provided with a reverse threaded portion (8) performing an operation sucking the seal-fluid by the pumping action during rotation, so that the seal-fluid comes into concentration at the sliding line (5) due to the pumping action of both the threaded portions (7, 8).
